# EUROPEAN PATENT SPECIFICATION

(11) **EP 3 017 977 B1**
(45) Date of publication and mention of the grant of the patent: **24.05.2017**
(21) Application number: 15189768.3
(22) Date of filing: 14.10.2015
(51) Int. Cl.: B60H 1/00, B60H 1/34, F24F 13/08, F24F 13/06

(54) **AIR BLOWING DEVICE**
LUFTAUSBLASVORRICHTUNG
DISPOSITIF DE SOUFFLAGE D'AIR

(30) Priority: 31.10.2014 JP 2014222607
(43) Date of publication of application: 11.05.2016
(73) Proprietor: Howa Plastics Co., Ltd., Aichi 470-0496 (JP)
(72) Inventor: YAMAMOTO, Masaaki, Toyota-shi, Aichi 470-0496 (JP); KANEDA, Kentaro, Toyota-shi, Aichi 470-0496 (JP); KAJIWARA, Kazutomo, Toyota-shi, Aichi 471-8571 (JP)
(74) Representative: Ettmayr, Andreas

(56) References cited:
- EP-A1- 1 920 955
- WO-A1-2011/040519
- DE-C1- 4 334 535
- JP-A- 2004 026 038
- US-A1- 2004 152 411

## Description

### BACKGROUND OF THE INVENTION

### 1. Field of the Invention

The present invention relates to an air blowing device including a tubular body defining an airflow passage and an air outlet, a guide wall for guiding an airflow having passed through the air outlet in an intended direction, and a flow velocity adjusting mechanism capable of adjusting a flow velocity of the airflow passing through the air outlet.

### 2. Description of the Related Art

Hitherto, there has been proposed an air blowing device for supplying cooling or heating air to a vehicle cabin of an automobile or the like. In general, this type of air blowing device is capable of adjusting a flow direction of an airflow or the like blown from the air blowing device (hereinafter referred to as "blowing airflow").

One of the related-art air blowing devices (hereinafter referred to as "related-art device") includes a housing defining an airflow passage and an air outlet, and an upstream-side fin and a downstream-side fin for adjusting the flow direction of the blowing airflow. The airflow passage of the related-art device has a unique sectional shape, in which convex portions each having a triangular shape in cross section protrude in the vicinity of the air outlet inside the same flow passage. The airflow, which is primarily rectified by the upstream-side fin and the downstream-side fin, is secondarily rectified due to the sectional shape. With this multi-level rectification, the related-art device is capable of accurately adjusting the flow direction of the blowing airflow even when the air outlet has such a narrow shape as a rectangle that is short in a vertical direction and long in a horizontal direction as disclosed in Japanese Patent Application Laid-open No. 2014-91376.

The related-art device realizes the narrower air outlet while maintaining the function to adjust the flow direction of the blowing airflow. On the other hand, from the viewpoint of further enhancing the appearance of an interior of the automobile and the like, it is desired to keep the air outlet invisible to the extent possible by arranging the air outlet at a position less likely to be visually recognized by a user of the automobile or the like as well as narrowing the air outlet so that the air outlet is less likely to be recognized.

For example, as an example of keeping the air outlet invisible, it is conceivable to arrange a mask in the vicinity of the air outlet, for blocking a line of sight of the user or the like. However, when the mask is inadvertently arranged in the vicinity of the air outlet of the related-art device, the flow direction of the blowing airflow may be changed to an unintended direction due to the mask though the air outlet may be kept invisible. That is, when the air outlet is kept invisible, the function of the related-art device to adjust the flow direction of the blowing airflow may be impaired. As described above, it is not easy to keep the air outlet invisible while maintaining the function as the air blowing device. Another known air-blowing device is disclosed by WO2011/040519, which is considered as the closest prior art.

### SUMMARY OF THE INVENTION

The present invention has been made in view of the above-mentioned problems, and provides an air blowing device capable of keeping an air outlet invisible to the extent possible without impairing a function as the air blowing device.

In order to solve the above-mentioned problems, according to one embodiment of the present invention, there is provided an air blowing device, including: a tubular body defining an airflow passage and an air outlet; a "guide wall" for guiding an airflow having passed through the air outlet in an intended direction; and a "flow velocity adjusting mechanism" capable of adjusting a flow velocity of the airflow passing through the air outlet.

Specifically, the guide wall has a "convex surface shape" protruding in a direction intersecting with a forward direction of the air outlet, and is arranged so that a projection image, which is obtained by projecting the guide wall onto an imaginary plane including the air outlet, "covers the entire air outlet."

Further, the flow velocity adjusting mechanism is configured to adjust the "flow velocity" in accordance with the intended direction.

According to the above-mentioned structure, the guide wall of the air blowing device has the above-mentioned "convex surface shape" and "arrangement," and hence, when a user of an automobile or the like views the air blowing device from the "front side of the air outlet," a line of sight of the user or the like is blocked by the "guide wall" so that the air outlet is not visually recognized by the user or the like. Further, when the "flow velocity adjusting mechanism" adjusts the "flow velocity of the airflow passing through the air outlet" in consideration of the "intended direction" of the blowing airflow, a position at which the airflow is separated from the guide wall (hereinafter referred to as "separating position") is adjusted so that the blowing airflow is guided in the "intended direction."

The above-mentioned features according to the one embodiment of the present invention are described in detail below.

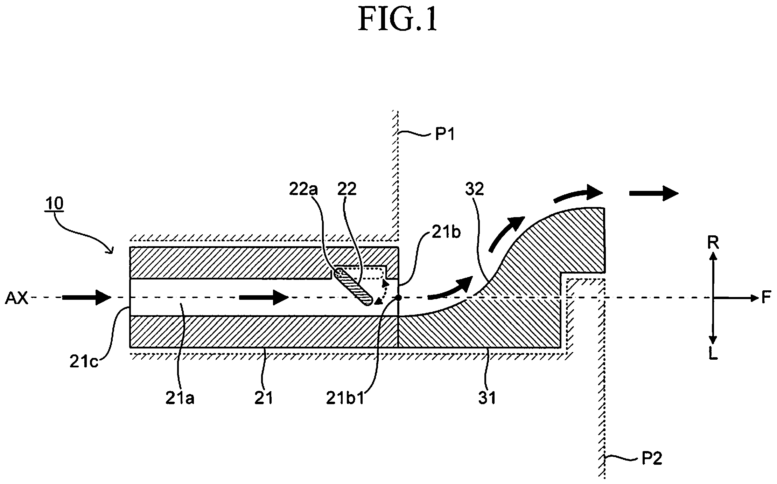

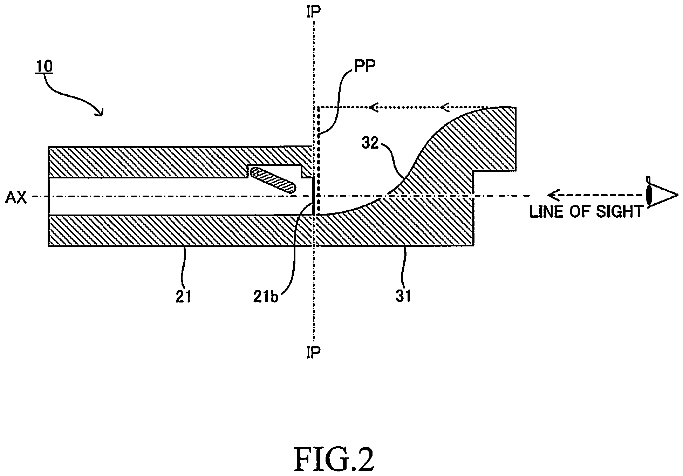

The guide wall according to the one embodiment of the present invention is formed on a downstream side with respect to the air outlet to "guide the airflow having passed through the air outlet in the intended direction." The guide wall has the "convex surface shape protruding in the direction intersecting with the forward direction of the air outlet." The guide wall is arranged so that the "projection image, which is obtained by projecting the guide wall (curved surface having a convex shape) onto the imaginary plane including the air outlet," covers the "entire air outlet" as illustrated in, for example, FIG. 1 and FIG. 2. As a result, when the user or the like views the air blowing device along the projection direction (that is, from the front side of the air outlet), the air outlet is hidden by the guide wall so that the air outlet is not visually recognized by the user or the like.

On the other hand, the "airflow having passed through the air outlet" is caused to flow along the guide wall in a manner of adhering to the surface (curved surface having a convex shape) of the guide wall. This is because, when an object is present in the vicinity of a fluid having viscosity, an effect of curving a flow of the fluid along a surface of the object (Coanda effect) is generated. More specifically, the airflow caused to flow along the surface of the guide wall is subjected to an adhesive force caused by the Coanda effect (force of moving the airflow close to the guide wall), a centrifugal force caused by movement of the air (force of moving the airflow away from the guide wall), and a pressing force caused by a difference pressure between an air pressure in the airflow and an air pressure around the airflow (force of moving the airflow close to the guide wall). As long as the force of moving the airflow close to the guide wall (adhesive force or pressing force) is larger than the force of moving the airflow away from the guide wall (centrifugal force), the airflow is caused to flow along the guide wall without being separated from the guide wall.

In contrast, when the "flow velocity of the airflow passing through the air outlet" is increased, the flow velocity of the airflow caused to flow along the wall surface of the guide wall is also increased. At this time, as represented by Bernoulli's principle, the air pressure in the airflow is reduced, and hence the difference pressure between the air pressure in the airflow and the air pressure around the airflow is increased. As a result, the pressing force is increased, and hence the airflow is not easily separated from the guide wall. However, when the flow velocity of the airflow is increased, not only the pressing force but also the adhesive force and the centrifugal force are changed. Specifically, at this time, it is generally thought that the adhesive force is reduced and the centrifugal force is increased, with the result that the airflow is easily separated from the guide wall. Here, according to experiments and the like conducted by the inventors of the present invention, it is found that within a range of a flow velocity assumed in a general air blowing device, the flow velocity of the airflow exerts a larger influence on the pressing force than on the adhesive force and the centrifugal force. In other words, it is found that as the flow velocity of the airflow becomes higher, it becomes more difficult to separate the airflow from the guide wall, and that as the flow velocity of the airflow becomes lower, it becomes easier to separate the airflow from the guide wall. As a result, considering attenuation of the airflow caused to flow along the guide wall (airflow gradually reduced in flow velocity as approaching a downstream side of the guide wall), the separating position is shifted to the downstream side as the "flow velocity of the airflow passing through the air outlet" becomes higher, and the separating position is shifted to the upstream side as the flow velocity of the airflow passing through the air outlet becomes lower. As described above, when the flow velocity adjusting mechanism "changes the flow velocity," the separating position of the airflow is changed.

In general, the airflow separated from the guide wall is caused to flow in a direction along a tangential plane of the guide wall (hereinafter referred to as "tangential plane direction") at the separating position. In other words, the flow direction of the blowing airflow can be adjusted by changing the separating position. Specifically, when changing the separating position using the flow velocity adjusting mechanism in the above-mentioned manner, within a range determined based on a shape of the guide wall (within a range where the tangential plane of the guide wall may exist), the flow direction of the blowing airflow can be adjusted. Accordingly, through the adjustment of the "flow velocity of the airflow passing through the air outlet so as to separate the airflow at the separating position corresponding to the "intended direction" of the blowing airflow, namely, so as to match the tangential plane direction of the guide wall to the intended direction at the separating position, the flow direction of the blowing airflow can be adjusted. That is, the flow direction of the blowing airflow can be adjusted through operation of the flow velocity adjusting mechanism "in accordance with the intended direction."

Thus, the air blowing device according to the one embodiment of the present invention can keep the air outlet invisible to the extent possible without impairing the function as the air blowing device to adjust the flow direction of the blowing airflow.

Further, the air blowing device according to the one embodiment of the present invention does not require an airflow direction adjustment mechanism such as a fin unlike the related-art device, and hence the air outlet can also be further narrowed as compared to that in the related-art device. In addition, not only the air outlet but also the air blowing device itself may be less likely to be recognized by the user or the like with the use of the air blowing device according to the one embodiment of the present invention, in particular, the guide wall as a part of another interior component of the automobile, such as a frame for fixing a display of a car navigation system or the like. In this manner, the appearance of an interior of the automobile and the like can also be further enhanced.

Incidentally, the above-mentioned "air outlet" corresponds to an "opening end of the airflow passage (end portion of a hollow portion inside the tubular body on the downstream side)," and is formed on an upstream side with respect to the guide wall. From the viewpoint of leading the airflow having passed through the air outlet to the guide wall while preventing stagnation to the extent possible, it is preferred that a distance between the air outlet and an end portion of the guide wall on the upstream side be as small as possible, and further preferred that the air outlet and the end portion of the guide wall be located at the same position.

The above-mentioned "forward direction of the air outlet" corresponds to an "extending direction of a straight line passing through a center of an opening plane of the air outlet so as to be orthogonal to the opening plane." The forward direction of the air outlet may also be expressed as, for example, a direction in which the airflow having passed through the air outlet is caused to flow straight, or as an axial direction of the airflow passage.

The structure and effects of the air blowing device according to the one embodiment of the present invention are described above. Next, an aspect of the air blowing device according to the one embodiment of the present invention is described below.

In the air blowing device according to the one embodiment of the present invention, the flow velocity adjusting mechanism only needs to have a configuration capable of adjusting the flow velocity of the airflow passing through the air outlet, and specific structure or the like of the flow velocity adjusting mechanism is not particularly limited. For example, as the flow velocity adjusting mechanism, there may be employed a valve body, a shutter, or a diaphragm capable of varying the passage area of the airflow passage, or a mechanism for adjusting an actuation amount of a pump or the like for supplying the air to the air blowing device. Those mechanisms may be selected as appropriate in consideration of a variety of performance required for the air blowing device, such as accuracy of the flow direction of the blowing airflow, easiness of downsizing, easiness of manufacture, and manufacturing cost.

For example, when employing a valve body capable of varying the passage area of the airflow passage as the flow velocity adjusting mechanism, the flow velocity of the airflow passing through the air outlet can be adjusted with relatively simple structure. As a result, the downsizing and manufacture of the air blowing device can be facilitated, and hence the manufacturing cost of the air blowing device can be reduced.

In view of the above, in the air blowing device according to the aspect of the present invention, the flow velocity adjusting mechanism may be a valve body capable of varying a passage area of the airflow passage, and the valve body may increase the flow velocity by reducing the passage area, and may reduce the flow velocity by increasing the passage area.

### BRIEF DESCRIPTION OF THE DRAWINGS

FIG. 1 is a sectional view for illustrating an air blowing device according to an embodiment of the present invention.
FIG. 2 is a sectional view for illustrating the air blowing device according to the embodiment of the present invention.
FIG. 3 is a schematic view for illustrating a relationship between a pivot angle of a valve body, a separating position of an airflow, and a flow direction of the blowing airflow.
FIG. 4 is a schematic view for illustrating a relationship between a pivot angle of the valve body, a separating position of the airflow, and a flow direction of the blowing airflow.
FIG. 5 is a schematic view for illustrating a relationship between a pivot angle of the valve body, a separating position of the airflow, and a flow direction of the blowing airflow.

### DETAILED DESCRIPTION OF THE PREFERRED EMBODIMENTS

Now, an air blowing device according to embodiments of the present invention is described referring to the drawings.

### <Overview of Device>

FIG. 1 is an illustration of a schematic configuration of an air blowing device 10 according to an embodiment of the present invention (hereinafter referred to as "embodiment device 10"). The embodiment device 10 is installed on an instrument panel of an automobile so as to be interposed between a peripheral component P1 and a peripheral component P2. Note that, in this embodiment, the peripheral component P1 is a housing of the instrument panel, and the peripheral component P2 is an exterior portion of a display of a car navigation system.

Specifically, the embodiment device 10 includes a hollow columnar portion for allowing an airflow to pass therethrough (tubular body 21 described later), and a shelf-like portion, i.e. a rising portion like a continental slope adjacent to a continental shelf, for allowing the airflow to be guided along a curved wall surface (guide wall 31 described later). FIG. 1 is a schematic sectional view for illustrating the embodiment device 10 when the embodiment device 10 is cut along a plane parallel to an axial line AX of the embodiment device 10 in a lateral direction (in a direction from a right side R to a left side L described later). In other words, FIG. 1 is a schematic sectional view for illustrating the embodiment device 10 when the embodiment device 10 is viewed from above.

For the sake of convenience, a direction toward a front side of the embodiment device 10 along the axial line AX is hereinafter referred to as "forward direction F," and directions orthogonal to the forward direction F toward right and left sides of the embodiment device 10 are hereinafter referred to as "rightward direction R" and "leftward direction L," respectively. Note that, the rightward and leftward directions are defined based on rightward and leftward directions when a user of the automobile views the embodiment device 10 mounted on a periphery of a dashboard of the automobile or the like.

As illustrated in FIG. 1, the embodiment device 10 includes the tubular body 21, a valve body 22, and the guide wall 31. Now, structures of those members are described in more detail.

The tubular body 21 defines an airflow passage 21a thereinside and an air outlet 21 b in an end portion thereof in the forward direction F. Note that, the tubular body 21 is a tubular body having a substantially rectangular parallelepiped shape, and the air outlet 21 b has a substantially rectangular shape when viewed from the front side F. Further, the guide wall 31 is formed on a downstream side with respect to the air outlet 21b of the tubular body 21, for guiding an airflow having passed through the air outlet 21b in an intended direction. Note that, a width of the guide wall 31 in a vertical direction (direction perpendicular to the drawing sheet) is substantially equal to a width of the tubular body 21 in the vertical direction. With those structures, air, which has flowed from an opening portion 21c of the tubular body 21 on a rear side (side opposite to the front side F), passes through the airflow passage 21 a. The air is then blown from the opening portion (air outlet 21b) on the front side F, and is guided (led) in the intended direction along the guide wall 31. The arrows in FIG. 1 indicate the flow of the air.

The guide wall 31 has a wall surface 32 having a convex surface shape (curved surface having a convex shape). The wall surface 32 of the guide wall 31 protrudes in a direction intersecting with the forward direction F of the air outlet 21 b (extending direction of a straight line passing through a center point 21 b1 of an opening plane of the air outlet 21b so as to be orthogonal to the opening plane). Specifically, the forward direction F of the air outlet 21b is an extending direction of the axial line AX in FIG. 1, and the wall surface 32 of the guide wall 31 protrudes from the left side L to the right side R in FIG. 1.

Further, as illustrated in FIG. 2, the guide wall 31, specifically, the wall surface 32 is arranged so that a projection image PP, which is obtained by projecting the guide wall 31 (wall surface 32) onto an imaginary plane IP including the air outlet 21b, covers the entire air outlet 21b.

Therefore, when the user of the automobile or the like views the embodiment device 10 from the front side of the embodiment device 10 (that is, along the projection direction) as indicated by the line of sight in FIG. 2, the air outlet 21b is hidden by the guide wall 31 so that the air outlet 21b is not visually recognized by the user or the like.

Referring to FIG. 1 again, the valve body 22 is a plate body having a substantially rectangular shape in plan view. The valve body 22 is supported in a pivotable manner on the tubular body 21 defining the airflow passage 21a, specifically, an inner wall portion of the tubular body 21. The valve body 22 is capable of varying the passage area of the airflow passage 21 a within a predetermined range of from a maximum value corresponding to a full open state of the passage to a predetermined minimum value larger than zero by pivoting about a pivot axis 22a. In other words, the valve body 22 is pivotable within a range of from a pivot angle, at which the passage area of the airflow passage 21a becomes maximum value, to a pivot angle, at which the passage area becomes the predetermined minimum value.

In this embodiment, as long as the valve body 22 pivots within the above-mentioned range, the amount of the air passing through the airflow passage 21a (that is, a flow rate of the airflow passing through the air outlet 21 b) is kept substantially constant irrespective of the pivot angle of the valve body 22. Specifically, a pump (not shown) for supplying the air to the embodiment device 10 supplies, to the embodiment device 10, the air having a pressure high enough to ignore increase and decrease in pressure loss of the airflow passage 21 a involving the pivot of the valve body 22. Accordingly, in accordance with a change in the pivot angle of the valve body 22, the flow rate of the airflow passing through the air outlet 21 b is not changed, but a flow velocity of the airflow is changed as described later in detail.

Note that, when the pivot angle of the valve body 22 is out of the above-mentioned range (that is, when the passage area of the airflow passage 21a is smaller than the minimum value), there is a fear in that the pressure loss of the passage is extremely increased, thereby being incapable of maintaining a proportional relationship between the pivot angle of the valve body 22 and the flow velocity of the airflow passing through the air outlet 21b. Conversely, the minimum value in the above-mentioned range is determined as a minimum passage area capable of maintaining the proportional relationship between the pivot angle of the valve body 22 and the flow velocity of the airflow passing through the air outlet 21b.

Note that, the valve body 22 is configured such that the pivot angle of the valve body 22 is operable by the user. For example, the valve body 22 is configured such that the pivot angle is operable by the user through intermediation of a link member (not shown), or that the pivot angle is operable through actuation of a motor (not shown) in accordance with an instruction from the user.

The overview of the embodiment device 10 is described above.

### <Actual Actuation>

Next, actual actuation of the embodiment device 10 is described.

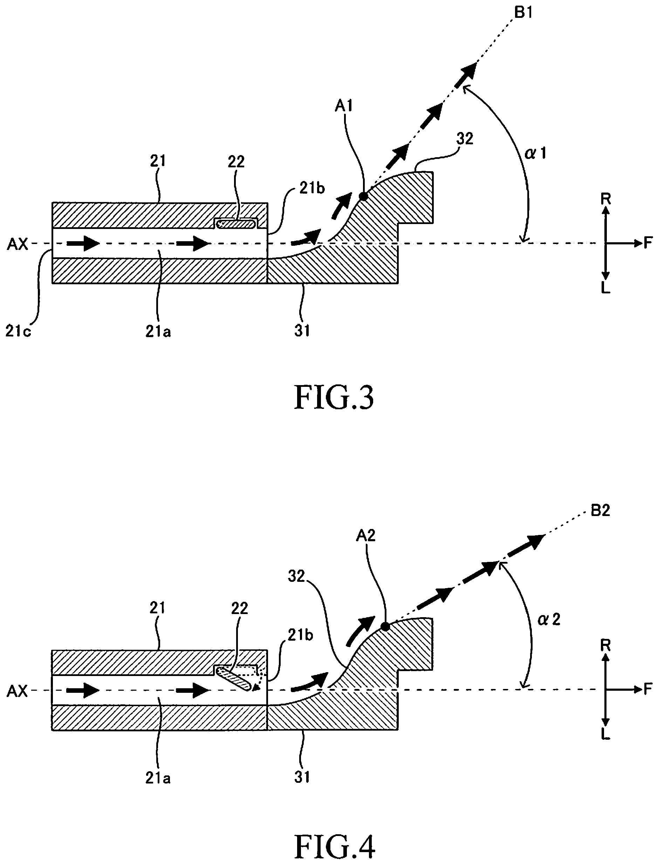

The embodiment device 10 is configured to adjust a flow direction of the blowing airflow by changing the pivot angle of the valve body 22 to change the flow velocity of the airflow passing through the air outlet 21b. Now, the adjustment of the blowing airflow by the embodiment device 10 is described referring to FIG. 3 to FIG. 5. FIG. 3 to FIG. 5 are schematic sectional views for illustrating the embodiment device 10 when the embodiment device 10 is cut along the plane parallel to the axial line AX of the embodiment device 10 in the lateral direction similarly to FIG. 1. Note that, in FIG. 3 to FIG. 5, for the sake of convenience, the illustration of the peripheral components P1 and P2 is omitted.

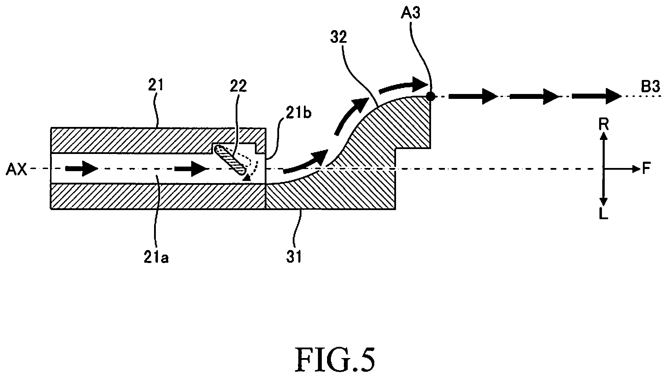

As illustrated in FIG. 3, the airflow, which has flowed from the opening portion 21 c of the embodiment device 10 on the rear side into the airflow passage 21 a, passes through the air outlet 21 b, and then flows along the wall surface 32 of the guide wall 31 due to the Coanda effect. As illustrated in FIG. 3, when the pivot angle of the valve body 22 is the "pivot angle at which the passage area of the airflow passage 21 a is maximum," the passage area of the airflow passage 21 a is a first area (maximum passage area) larger than a passage area in each of embodiments described later in FIG. 4 and FIG. 5. In this case, the flow velocity of the airflow passing through the air outlet 21 b is a first flow velocity lower than a flow velocity of an airflow in each of the embodiments described later in FIG. 4 and FIG. 5. In this case, the airflow having passed through the air outlet 21b is separated from the wall surface 32 of the guide wall 31 at a "separating position A1" illustrated in FIG. 3. Then, the airflow is caused to flow in a tangential plane direction of the wall surface 32 of the guide wall 31 at the separating position A1 (tangential direction B1 in FIG. 3). As a result, the flow direction of the blowing airflow is adjusted to the rightward direction R of the embodiment device 10. As an indicator of the flow direction of the blowing airflow, for example, an angle formed between the axial line AX of the embodiment device 10 and the flow direction B1 of the blowing airflow is an angle α1.

Next, as illustrated in FIG. 4, when the pivot angle of the valve body 22 is the "pivot angle at which the passage area of the airflow passage 21a is medium," the passage area of the airflow passage 21a is a second area smaller than the first area illustrated in FIG. 3. In this case, the flow velocity of the airflow passing through the air outlet 21 b is a second flow velocity higher than the first flow velocity illustrated in FIG. 3. In this case, the airflow having passed through the air outlet 21 b is separated from the wall surface 32 of the guide wall 31 at a "separating position A2" shifted to a downstream side with respect to the separating position A1 illustrated in FIG. 3. Then, the airflow is caused to flow in the tangential plane direction of the wall surface 32 of the guide wall 31 at the separating position A2 (tangential direction B2 in FIG. 4). As a result, the flow direction of the blowing airflow is adjusted closer to the forward direction F than the flow direction in the embodiment illustrated in FIG. 3. As an indicator of the flow direction of the blowing airflow, for example, an angle formed between the axial line AX of the embodiment device 10 and the flow direction B2 of the blowing airflow is an angle α2, which is smaller than the angle α1 illustrated in FIG. 3.

Next, as illustrated in FIG. 5, when the pivot angle of the valve body 22 is the "pivot angle at which the passage area of the airflow passage 21a has the above-mentioned minimum value," the passage area of the airflow passage 21 a is a third area smaller than the second area illustrated in FIG. 4. In this case, the flow velocity of the airflow passing through the air outlet 21 b is a third flow velocity higher than the second flow velocity illustrated in FIG. 4. In this case, the airflow having passed through the air outlet 21 b is separated from the wall surface 32 of the guide wall 31 at a "separating position A3" shifted to the downstream side with respect to the separating position A2 illustrated in FIG. 4. Then, the airflow is caused to flow in the tangential plane direction of the wall surface 32 of the guide wall 31 at the separating position A3 (tangential direction B3 in FIG. 5). The separating position A3 corresponds to an endmost portion of the guide wall 31 on the downstream side. As a result, the flow direction of the blowing airflow is adjusted closer to the forward direction F than the flow direction in the embodiment illustrated in FIG. 4 (adjusted substantially to the forward direction F). As an indicator of the flow direction of the blowing airflow, for example, the axial line AX of the embodiment device 10 and the flow direction B3 of the blowing airflow are parallel to each other, and an angle formed between the axial line AX and the flow direction B3 is an angle of 0° (namely, they are parallel), which is smaller than the angle α2.

As described above, the embodiment device 10 is capable of adjusting the flow direction (B1 to B3) of the blowing airflow as well as changing the separating position (A1 to A3) by adjusting the pivot angle of the valve body 22 supported in a pivotable manner on the inner wall surface of the tubular body 21. Specifically, the embodiment device 10 is capable of adjusting the flow direction of the blowing airflow between the rightward direction R of the embodiment device 10 and the forward direction F thereof.

The actual actuation of the embodiment device 10 is described above.

As described above, the embodiment device 10 includes the tubular body 21, the valve body 22, and the guide wall 31, which are structured as described above. With this, the embodiment device 10 can adjust the flow direction of the blowing airflow while preventing the air outlet 21b from being visually recognized by the user (keeping the air outlet 21 b invisible).

### <Other Embodiments>

The present invention is not limited to the above-mentioned embodiment, and various modifications may be employed within the scope of the present invention.

For example, the embodiment device 10 employs the valve body 22 as a flow velocity adjusting mechanism for changing the flow velocity of the airflow passing through the air outlet 21 b. However, it is not always necessary to employ the valve body 22 as the flow velocity adjusting mechanism. For example, as the flow velocity adjusting mechanism, a shutter or a diaphragm for opening and closing the airflow passage 21a may be employed. In addition, for example, as the flow velocity adjusting mechanism, there may be employed a pump itself for supplying the air to the air blowing device, and the flow velocity may be adjusted through adjustment of the amount of the air discharged from the pump.

Further, the embodiment device 10 is mounted inside a vehicle cabin of the automobile (inner panel). However, the air blowing device of the present invention may be mounted on another portion such as a pillar portion inside the vehicle cabin of the automobile. In addition, the air blowing device of the present invention is not limited to the one mounted inside the vehicle cabin of the automobile, and, for example, may be mounted to such various members that air supply and stop of the air supply are desired.

## Claims

1. An air blowing device (10), comprising:
a tubular body (21) defining an airflow passage (21a) and an air outlet (21b);
a guide wall (31) for guiding an airflow having passed through the air outlet in an intended direction; and
a flow velocity adjusting mechanism (22) capable of adjusting a flow velocity of the airflow passing through the air outlet, wherein the flow velocity adjusting mechanism (22) is configured to adjust the flow velocity in accordance with the intended direction,**characterized in that**:
the guide wall (31) has a convex surface shape protruding in a direction intersecting with a forward direction (F) of the air outlet (21b), and is arranged so that a projection image, which is obtained by projecting the guide wall (31) onto an imaginary plane (P1) including the air outlet, covers the entire air outlet (21b).

2. An air blowing device according to claim 1,
wherein the flow velocity adjusting mechanism comprises a valve body (22) capable of varying a passage area of the airflow passage (21 b), and wherein the valve body (22) increases the flow velocity by reducing the passage area, and reduces the flow velocity by increasing the passage area.

## Patentansprüche

1. Luftblasvorrichtung (10), aufweisend:
einen rohrförmigen Körper (21), der einen Luftstromdurchlass (21a) und einen Luftauslass (21 b) definiert;
eine Führungswand (31) zum Führen eines Luftstroms, der durch den Luftauslass gelangt ist, in einer beabsichtigten Richtung; und
einen Strömungsgeschwindigkeitseinstellmechanismus (22), der dazu fähig ist, eine Strömungsgeschwindigkeit des durch den Luftauslass gelangenden Luftstroms einzustellen,
wobei der Strömungsgeschwindigkeitseinstellmechanismus (22) dazu konfiguriert ist, die Strömungsgeschwindigkeit gemäß der beabsichtigten Richtung einzustellen,
**dadurch gekennzeichnet, dass**:
die Führungswand (31) eine konvexe Form hat, die in einer Richtung vorsteht, die sich mit einer Vorwärtsrichtung (F) des Luftauslasses (21 b) schneidet, und so angeordnet ist, dass ein Projektionsbild, das durch Projizieren der Führungswand (31) auf eine den Luftauslass (21) enthaltende imaginäre Ebene (P1) erhalten wird, den gesamten Luftauslass (21 b) abdeckt.

2. Luftblasvorrichtung gemäß Anspruch 1,
wobei der Strömungsgeschwindigkeitseinstellmechanismus einen Ventilkörper (22) aufweist, der dazu fähig ist, eine Durchlassquerschnittsfläche des Luftstromdurchlasses (21 b) zu variieren, und
wobei der Ventilkörper (22) die Strömungsgeschwindigkeit dadurch erhöht, dass die Durchlassquerschnittsfläche verringert wird, und die Strömungsgeschwindigkeit dadurch verringert, dass die Durchlassquerschnittsfläche vergrößert wird.

## Revendications

1. Dispositif de soufflage d'air (10), comprenant :
un corps tubulaire (21) définissant un passage d'écoulement d'air (21a) et une sortie d'air (21b) ;
une paroi de guidage (31) pour guider un écoulement d'air ayant traversé la sortie d'air dans une direction prévue ; et
un mécanisme d'ajustement de vitesse d'écoulement (22) capable d'ajuster une vitesse d'écoulement de l'écoulement d'air passant à travers la sortie d'air,
dans lequel le mécanisme d'ajustement de vitesse d'écoulement (22) est configuré pour ajuster la vitesse d'écoulement selon la direction prévue,
**caractérisé en ce que** :
la paroi de guidage (31) possède une forme de surface convexe faisant saillie dans une direction croisant une direction vers l'avant (F) de la sortie d'air (21b), et est agencée de telle sorte qu'une image de projection, qui est obtenue en projetant la paroi de guidage sur un plan imaginaire (P1) comportant la sortie d'air, couvre l'ensemble de la sortie d'air (21b).

2. Dispositif de soufflage d'air selon la revendication 1,
dans lequel le mécanisme d'ajustement de vitesse d'écoulement comprend un corps de valve (22) capable de modifier une zone de passage du passage d'écoulement d'air (21b), et
dans lequel le corps de valve (22) augmente la vitesse d'écoulement en réduisant la zone de passage, et réduit la vitesse d'écoulement en augmentant la zone de passage.
